# EUROPÄISCHE PATENTSCHRIFT

(11) **EP 2 930 508 B1**
(45) Veröffentlichungstag und Bekanntmachung des Hinweises auf die Patenterteilung: **05.06.2019**
(21) Anmeldenummer: 15163016.7
(22) Anmeldetag: 09.04.2015
(51) Int. Cl.: G01N 29/22, G01N 29/265, G01N 29/28

(54) **VERFAHREN ZUM PRÜFEN VON BAUTEILEN MITTELS ULTRASCHALL UND PRÜFEINRICHTUNG MIT EINEM MANIPULATOR**
METHOD FOR INSPECTING COMPONENTS BY ULTRASOUND AND TESTING DEVICE WITH A MANIPULATOR
PROCÉDÉ DE VÉRIFICATION DE COMPOSANTS PAR ULTRASONS ET DISPOSITIF DE VÉRIFICATION AVEC UN MANIPULATEUR

(30) Priorität: 10.04.2014 DE 102014105110
(43) Veröffentlichungstag der Anmeldung: 14.10.2015
(73) Patentinhaber: Deutsches Zentrum für Luft- und Raumfahrt e.V., 51147 Köln (DE)
(72) Erfinder: Schmidt, Thomas, 86163 Augsburg (DE); Huber, Armin, 86199 Augsburg (DE); Nuschele, Stefan, 86161 Augsburg (DE)
(74) Vertreter: Ege Lee & Partner Patentanwälte PartGmbB

(56) Entgegenhaltungen:
- WO-A2-2007/021541
- DE-B3- 10 259 653
- US-A1- 2009 078 049
- US-A1- 2013 145 850

## Beschreibung

Die Erfindung betrifft ein Verfahren zum zerstörungsfreien Prüfen von Bauteilen, insbesondere Faserverbundbauteilen, mithilfe einer Prüfeinrichtung, die Prüfeinrichtung aufweisend einen Träger, eine an dem Träger zu einer Bauteiloberfläche auf einen angepassten Abstand und einen angepassten Winkel einstellbar angeordnete Sendeeinrichtung zum Senden von Ultraschall und eine an dem Träger zu einer Bauteiloberfläche auf einen angepassten Abstand und einen angepassten Winkel einstellbar angeordnete Empfangseinrichtung zum Empfangen von Ultraschall, wobei die Sendeeinrichtung und die Empfangseinrichtung jeweils voneinander gesondert translatorisch und/oder rotatorisch einstellbar sind. Außerdem betrifft die Erfindung eine Prüfeinrichtung zum zerstörungsfreien Prüfen von Bauteilen, insbesondere Faserverbundbauteilen.

Aus der DE 10 2008 021 248 A1 ist ein Verfahren bekannt zum Bestimmen eines Strukturzustandes eines, insbesondere unidirektional verstärkten, Faserverbundwerkstoffes, bei dem der Faserverbundwerkstoff zerstörungsfrei geprüft wird, und bei dem Lamb-Wellen in dem Faserverbundwerkstoff angeregt und gemessen werden, wobei viskoelastische Materialkennwerte des Faserverbundwerkstoffes bestimmt werden. Die Lamb-Wellen werden mittels mindestens eines, insbesondere auf die Oberfläche des Faserverbundwerkstoffes applizierten und/oder in den Faserverbundwerkstoff integrierten, Senders angeregt. Die angeregten Lamb-Wellen werden mittels mindestens eines, insbesondere auf die Oberfläche des Faserverbundwerkstoffes applizierten und/oder in den Faserverbundwerkstoff integrierten, Empfängers gemessen.

Aus der EP 2 362 213 A1 ist ein Verfahren bekannt zur Überwachung oder Überprüfung von plattenförmigen Bauteilen, bei dem mit mindestens zwei in einem bekannten Abstand zueinander angeordneten Sensoren Ultraschallwellen detektiert werden und dabei mit Kenntnis der Schallgeschwindigkeiten von sich am/im jeweiligen Bauteil von elastischen Schallwellen mit sich voneinander unterscheidendem Wellen-Mode für mindestens eine ausgewählte Frequenz, nach Bestimmung des tatsächlichen Wellen-Modes der mit den Sensoren detektierten Schallwellen eine Positionsbestimmung von Fehlern am Bauteil, durch eine Bestimmung von Laufzeitdifferenzen der Schallwellen, die mit den Sensoren detektiert werden, durchgeführt wird. Dabei sind zwei Sensoren in einem bekannten konstanten Abstand zueinander an einem plattenförmigen Bauteil angebracht bzw. einmal zwei Sensoren und einmal drei Sensoren an einem Bauteil mit entsprechendem Abstand zueinander angeordnet bzw. zwei in einem Abstand voneinander entfernt angeordnete Piezowandler als Sensoren auf eine Aluminiumplatte geklebt.

Aus der US 2013/145850 A1 sind ein System und Verfahren bekannt zum Prüfen eines Bauteils, umfassend zwei mehrachsige Robotereinrichtungen mit Endeffektoren und eine Gleitanordnung mit zwei Gleitschienen für die Robotereinrichtungen. Die Gleitschienen sind beidseits des zu prüfenden Bauteils angeordnet, um eine voneinander unabhängige lineare Bewegung der Robotereinrichtungen zu ermöglichen. Zum Prüfen werden gemäß der US 2013/145850 A1 Ultraschallwerkzeuge vorgeschlagen, die in einem Durchschallungsverfahren betrieben werden können. Die Ultraschallwerkzeuge werden genau ausgerichtet, um Ultraschallsignale fehlerfrei von einer Robotereinrichtung durch das Bauteil zur anderen Robotereinrichtung zu übertragen. Aus einem dreidimensionalen Modell des Bauteils wird ein Prüfpfad generiert. Die Endeffektoren werden an gegenüberliegenden Seiten des Bauteils positioniert und jeweils entlang des Prüfpfads geführt, um Ultraschalldaten aufzunehmen. Der Prüfpfad umfasst eine Mehrzahl von Prüfpunkten.

Aus der DE 102 59 653 B3 sind ein System und Verfahren bekannt zur zerstörungsfreien Werkstoffprüfung eines Bauteils mittels Ultraschall, bei dem das zu prüfende Bauteil mittels einer Anordnung von mindestens zwei Ultraschallköpfen durchschallt wird. Gemäß der DE 102 59 653 B3 liegen sich die Ultraschallköpfe auf unterschiedlichen Seiten des Bauteils gegenüber und werden auf einer vorgegebenen Bahn über das Bauteil bewegt und mittels eines Flüssigkeitsstrahls akustisch an das Bauteil angekoppelt. Die Ultraschallköpfe werden unabhängig voneinander, aber synchronisiert, stets auf den unterschiedlichen Seiten des zu prüfenden Bauteils einander genau gegenüberliegend über die Kontur des Bauteils hinweg bewegt. Die Synchronisation kann durch einen Abgleich von aktuellen Positionen der Ultraschallköpfe mit abgespeicherten Daten eines dreidimensionalen Modells des zu prüfenden Bauteils erfolgen. Alternativ schlägt die DE 102 59 653 B3 vor, die Ultraschallköpfe in einem vorgestimmten Abstand einander gegenüberliegend stationär anzuordnen und das zu prüfende Bauteil kontrolliert zwischen den Ultraschallköpfen und mit seiner Bauteilkontur entlang der Ultraschallköpfe zu bewegen.

Der Erfindung liegt die Aufgabe zugrunde, ein eingangs genanntes Verfahren zu verbessern. Außerdem soll eine eingangs genannte Prüfeinrichtung baulich und/oder funktional verbessert werden. Insbesondere soll ein Prüfen vereinfacht werden. Insbesondere soll ein gesondertes Koppelmittel entbehrlich sein. Insbesondere sollen Auswertmöglichkeiten und/oder eine Auswertqualität erhöht werden. Insbesondere soll eine Prüfbarkeit laminierter Bauteile verbessert sein. Insbesondere soll eine Prüfbarkeit von Bauteilen aus sowohl quasi-isotropem als auch stark anisotropem Material verbessert sein. Insbesondere soll eine Prüfbarkeit von Bauteilen mit unterschiedlichen Materialstärken verbessert sein. Insbesondere soll eine Prüfbarkeit von gekrümmten Bauteilen verbessert sein.

Die Aufgabe wird gelöst mit einem Verfahren zum zerstörungsfreien Prüfen von Bauteilen, insbesondere Faserverbundbauteilen, mithilfe einer Prüfeinrichtung, die Prüfeinrichtung aufweisend einen Träger, eine an dem Träger zu einer Bauteiloberfläche auf einen angepassten Abstand und einen angepassten Winkel einstellbar angeordnete Sendeeinrichtung zum Senden von Ultraschall und eine an dem Träger zu einer Bauteiloberfläche auf einen angepassten Abstand und einen angepassten Winkel einstellbar angeordnete Empfangseinrichtung zum Empfangen von Ultraschall, wobei die Sendeeinrichtung und die Empfangseinrichtung jeweils voneinander gesondert translatorisch und/oder rotatorisch einstellbar sind, wobei zunächst die Sendeeinrichtung und/oder die Empfangseinrichtung unter Berücksichtigung einer digitalen Repräsentation eines zu prüfenden Bauteils und an eine jeweilige Prüfposition angepasst eingestellt werden und nachfolgend Ultraschall berührungslos in das Bauteil eingeleitet wird, wobei die Sendeeinrichtung und die Empfangseinrichtung auf derselben Bauteilseite angeordnet und mithilfe des eingeleiteten Ultraschalls in dem Bauteil Lamb-Wellen erzeugt werden.

Das Verfahren kann automatisiert durchgeführt werden. Das Verfahren kann im Rahmen einer Serienfertigung durchgeführt werden. Das Prüfen kann ein Erkennen und Lokalisieren von Defekten umfassen. Das Verfahren kann als Reflexionsschallverfahren durchgeführt werden. Das Verfahren kann als Durchschallungsverfahren durchgeführt werden. Das Verfahren kann in einem kombinierten Verfahren durchgeführt werden. Zum Durchführen des Verfahrens sind die Sendeeinrichtung und die Empfangseinrichtung erfindungsgemäß auf derselben Bauteilseite angeordnet.

Das Bauteil kann in einem fertigen, teilfertigen oder unfertigen Herstellungszustand vorliegen. Das Bauteil kann ein Flugzeugteil sein. Das Bauteil kann beispielsweise ein Rumpfteil oder ein Seitenleitwerkteil sein. Das Bauteil kann ein Fahrzeugteil sein. Das Bauteil kann beispielsweise ein Karosserieteil sein. Das Bauteil kann gekrümmt sein. Das Bauteil kann einfach oder mehrfach gekrümmt sein. Das Bauteil kann einen keramischen Werkstoff aufweisen. Das Bauteil kann einen metallischen Werkstoff aufweisen. Das Bauteil kann einen Holzwerkstoff aufweisen.

Das Faserverbundbauteil kann Fasern aufweisen. Das Faserverbundbauteil kann Glasfasern, Kohlenstofffasern, Keramikfasern, Aramidfasern, Naturfasern und/oder Kunststofffasern aufweisen. Die Fasern können gerichtet sein. Das Faserverbundbauteil kann ein Laminat-Werkstück sein. Die Fasern können als Gewebe, Gelege oder Matte vorliegen. Das Faserverbundbauteil kann in einem Legeverfahren, Pressverfahren, Prepreg-Verfahren, Vakuum-Infusionsverfahren, Wickelverfahren oder Spritzverfahren hergestellt sein. Das Faserverbundbauteil kann ein Spritzguss-Bauteil, Spritzpress-Bauteil, Strangzieh-Bauteil oder Sheet-Molding-Compound-Bauteil sein. Die Fasern können in einen Matrixwerkstoff eingebettet sein.

Die Sendeeinrichtung und/oder die Empfangseinrichtung kann/können an eine jeweilige Prüfposition derart eingestellt werden, dass eine optimierte Einleitung von Ultraschall in das Bauteil und/oder ein optimierter Empfang von Ultraschall ermöglicht ist.

Bei einem berührungslosen Einleiten von Ultraschall kann die Sendeeinrichtung von einer Bauteiloberfläche beabstandet sein. Ein berührungsloses Einleiten von Ultraschall kann ohne ein gesondertes Koppelmittel, wie Gel oder Wasser, erfolgen. Bei einem berührungslosen Einleiten von Ultraschall kann Luft als Koppelmittel dienen.

Die Sendeeinrichtung und die Empfangseinrichtung werden zu einer Bauteiloberfläche jeweils auf einen angepassten Abstand und einen angepassten Winkel eingestellt. Die Sendeeinrichtung und die Empfangseinrichtung kann/können translatorisch und/oder rotatorisch eingestellt werden.

Die Prüfeinrichtung kann entlang einer Prüfbahn bewegt werden und dabei kann/können die Sendeeinrichtung und/oder die Empfangseinrichtung bahnsynchron verstellt werden. Ein bahnsynchrones Verstellen kann bedeuten, dass unterschiedlichen Bahnpunkten jeweils eine vorgegebene Einstellung der Sendeeinrichtung und/oder der Empfangseinrichtung zugeordnet ist/sind und die Sendeeinrichtung und/oder die Empfangseinrichtung an den jeweiligen Bahnpunkten synchronisiert auf diese Einstellung(en) eingestellt wird/werden. Die Einstellung(en) der Sendeeinrichtung und/oder der Empfangseinrichtung kann/können mit den jeweiligen Bahnpunkten synchronisiert werden. Die Sendeeinrichtung und/oder die Empfangseinrichtung kann/können bei einem Bewegen entlang der Prüfbahn kontinuierlich, quasi-kontinuierlich oder diskret eingestellt werden.

Die digitale Repräsentation des zu prüfenden Bauteils kann CAD-Daten und/oder FEM-Daten umfassen. Die digitale Repräsentation kann in einem Modellierungsverfahren erstellt sein. Die digitale Repräsentation kann 3D-CAD-Daten umfassen. Die digitale Repräsentation kann ein Kantenmodell, Drahtmodell, Flächenmodell, Volumenmodell, Körpermodell oder parametrisches Modell sein. Die FEM-Daten können zur Festkörpersimulation dienen. Die digitale Repräsentation kann Informationen über eine Bauteilgeometrie, eine innere Struktur, ein Sandwichaufbau, einen Lagenaufbau und/oder eine Faserorientierung aufweisen.

Lamb-Wellen können auch als Plattenwellen bezeichnet werden. Mithilfe des eingeleiteten Ultraschalls können in dem zu prüfenden Bauteil Schwingungen angeregt werden, bei denen Auslenkungen sowohl senkrecht zur Bauteiloberfläche als auch in Ausbreitungsrichtung parallel zur Bauteiloberfläche vorkommen. Die Lamb-Wellen können gemischte Druck- und Scherwellen sein. Die Lamb-Wellen können symmetrisch sein. Bei symmetrischen Lamb-Wellen können sich an einer Position des Bauteils gegenüberliegende Bauteiloberflächen zugleich von einer Bauteilmitte weg und wieder auf die Bauteilmitte zu bewegen. Die Lamb-Wellen können antisymmetrisch sein. Bei antisymmetrischen Lamb-Wellen können sich an einer Position des Bauteils gegenüberliegende Bauteiloberflächen zugleich in dieselbe Richtung bewegen. Bei antisymmetrischen Lamb-Wellen kann sich an einer Position des Bauteils eine Bauteiloberfläche von einer Bauteilmitte weg bewegen, während sich zugleich eine gegenüberliegende Bauteiloberfläche auf die Bauteilmitte zu bewegt und umgekehrt.

Eine Wellenlänge kann bezogen auf eine Bauteildicke lang sein. Dann können symmetrische Lamb-Wellen im Wesentlichen Longitudinalwellen mit Ausbreitungsrichtung in der Bauteilebene sein, eine Bewegung quer dazu kann durch Querkontraktionen zustande kommen. Antisymmetrische Lamb-Wellen können dann Biegeschwingungen des Bauteils sein.

Eine Wellenlänge kann bezogen auf eine Bauteildicke kurz sein. Dann können für eine Wellenlänge mehrere Schwingungsmodi auftreten. Bei höheren Schwingungsmodi können in Dickenrichtung des Bauteils mehrere gegeneinander schwingende Bereiche auftreten. Wenn die Wellenlänge wesentlich kleiner als die Bauteildicke ist, kann die Lamb-Welle zur Überlagerung von zwei Rayleigh-Wellen werden. Derartige Wellen können auch als Lamb-Rayleigh-Wellen bezeichnet werden.

Die Lamb-Wellen können dispersiv sein. Dann kann eine Ausbreitungsgeschwindigkeit, d. h. eine Phasengeschwindigkeit und eine Gruppengeschwindigkeit, von einer Wellenlänge abhängen. Die Lamb-Wellen können eine quasi-konstante Ausbreitungsgeschwindigkeit aufweisen.

Außerdem wird die der Erfindung zugrundeliegende Aufgabe gelöst mit einer Prüfeinrichtung zum zerstörungsfreien Prüfen von Bauteilen, insbesondere Faserverbundbauteilen, wobei die Prüfeinrichtung einen Träger, eine an dem Träger zu einer Bauteiloberfläche auf einen angepassten Abstand und einen angepassten Winkel einstellbar angeordnete Sendeeinrichtung zum Senden von Ultraschall, eine an dem Träger zu einer Bauteiloberfläche auf einen angepassten Abstand und einen angepassten Winkel einstellbar angeordnete Empfangseinrichtung zum Empfangen von Ultraschall und eine elektrische Steuereinrichtung zum Steuern der Sendeeinrichtung und/oder der Empfangseinrichtung und zum Einstellen einer jeweiligen Prüfposition unter Berücksichtigung einer digitalen Repräsentation eines zu prüfenden Bauteils aufweist und die Sendeeinrichtung und die Empfangseinrichtung jeweils voneinander gesondert translatorisch und/oder rotatorisch einstellbar sind, wobei die Prüfeinrichtung zur Anordnung der Sendeeinrichtung und der Empfangseinrichtung auf derselben Bauteilseite eingerichtet ist und mithilfe des eingeleiteten Ultraschalls in dem Bauteil Lamb-Wellen erzeugbar sind.

Die Prüfeinrichtung kann an einem Manipulator eines Industrieroboters anordenbar sein. Die Prüfeinrichtung kann als Effektor eines Industrieroboters dienen. Der Industrieroboter kann eine Steuereinrichtung aufweisen. Die Steuereinrichtung des Industrieroboters kann zum Steuern der Prüfeinrichtung dienen. Die Sendeeinrichtung und die Empfangseinrichtung können gemeinsam entlang einer Prüfbahn bewegbar sein. Die Prüfeinrichtung kann mithilfe eines Industrieroboters entlang einer Prüfbahn bewegbar sein.

Die Sendeeinrichtung kann wenigstens einen Ultraschallsender aufweisen. Die Empfangseinrichtung kann wenigstens einen Ultraschallempfänger aufweisen.

Die Prüfeinrichtung weist einen Träger auf. Die Sendeeinrichtung ist an dem Träger einstellbar angeordnet. Die Sendeeinrichtung ist während eines Prüfvorgangs einstellbar. Die Sendeeinrichtung kann relativ zu dem Träger verlagerbar, verschiebbar und/oder verschwenkbar sein. Die Sendeeinrichtung kann bezüglich einer Achse oder mehrerer Achsen translatorisch und/oder rotatorisch einstellbar sein.

Die Prüfeinrichtung weist einen Träger auf. Die Empfangseinrichtung ist an dem Träger einstellbar angeordnet. Die Empfangseinrichtung kann während eines Prüfvorgangs einstellbar sein. Die Empfangseinrichtung kann relativ zu dem Träger verlagerbar, verschiebbar und/oder verschwenkbar sein. Die Empfangseinrichtung kann bezüglich einer Achse oder mehrerer Achsen translatorisch und/oder rotatorisch einstellbar sein.

Zum Einstellen können die Prüfeinrichtung, die Sendeeinrichtung und/oder die Empfangseinrichtung jeweils einzeln und/oder in beliebiger Kombination einstellbar sein.

Die Prüfeinrichtung kann eine elektrische Signalschnittstelle aufweisen, um die Prüfeinrichtung unter Berücksichtigung einer digitalen Repräsentation eines zu prüfenden Bauteils und einer jeweiligen Prüfposition einzustellen.

Die Prüfeinrichtung kann eine elektromotorische, hydraulische und/oder pneumatische Einstelleinrichtung zum Einstellen der Sendeeinrichtung und/oder der Empfangseinrichtung aufweisen. Die Einstelleinrichtung kann wenigstens einen Aktuator aufweisen. Die Einstelleinrichtung kann wenigstens ein Getriebe aufweisen. Die Prüfeinrichtung kann eine elektrische Steuereinrichtung zum Steuern der Einstelleinrichtung aufweisen. Die Steuereinrichtung kann auch zum Steuern der Sendeeinrichtung und/oder der Empfangseinrichtung dienen. Als Steuereinrichtung kann eine Steuereinrichtung eines Industrieroboters dienen. Als Steuereinrichtung kann eine baulich und/oder funktional gesonderte Steuereinrichtung dienen.

Zusammenfassend und mit anderen Worten dargestellt ergibt sich somit durch die Erfindung unter anderem ein adaptiver Endeffektor für eine Luftultraschallprüfung zur Kompensation von Varianzen.

Es können eine bahnsynchrone sowie angetriebene Verstellmöglichkeit und eine Verwendung eines FEM-Modells zur Errechnung eines notwendigen Einschallwinkels kombiniert werden.

Der Einschallwinkel kann mit dem FEM-Modell an jeder beliebigen Stelle berechnet werden. Das FEM-Modell kann eine entsprechende Laminatdefinition umfassen. Ein verstellbarer Endeffektor kann eine Anpassung ermöglichen und zwar zu jedem Zeitpunkt auf einer zuvor programmierten Bahn. Die Kombination von Bauweise des Endeffektors und Vorgehen zur Ermittlung des Einschallwinkels kann an jeder Stelle eines Bauteils eine vollumfängliche, einseitige Prüfung in luftgekoppelter Ultraschalltechnik mit Lamb-Wellen auch für geometrisch komplexe Bauteile mit differenziertem Laminataufbau ermöglichen. Die Methode kann grundsätzlich bei der Transmissions- und Reflexionsprüfung angewandt werden.

Merkmal 1: kinematisierter Endeffektor. Zwei Prüfköpfe können sowohl in einer Achse translatorisch als auch in einer Achse rotatorisch bewegt werden. Es kann eine Verstellung um jeweils eine weitere Achse möglich sein. Die Verstellung kann bahnsynchron erfolgen. D. h. zu einem beliebigen Zeitpunkt auf einer willkürlichen Bahn kann ein dazugehöriger Abstand und Winkel der beiden Prüfköpfe zueinander eingestellt werden. Die Verstellung kann dabei auf verschiedene Arten erfolgen. Das können elektrische Antriebe von geeigneter Bauweise, wie Servomotor, Schrittmotor o. ä., sein. Alternativ kann die Verstellung hydraulisch oder auch pneumatisch erfolgen.

Merkmal 2: FEM-Modell zur Ermittlung eines erforderlichen Einschallwinkels. Das Design und die Auslegung von Faserverbundstrukturen kann in einer CAD-Umgebung und mit FE-Berechnung absolviert werden. D. h. für die Bauteile können sowohl ein geometrisches Modell (CAD) als auch eine Faserverbunddefinition auf Basis der Finite-Elemente-Methode (Netz, Properties, Lasten, Randbedingungen, Versagensmodelle) existieren. Das FEM-Modell kann durch eine Berechnung von Elementsteifigkeitsmatrizen eines jeden Elements für eine Erzeugung einer Gesamtsteifigkeitsmatrix und damit zur Bauteilauslegung verwendet werden. Zum anderen kann eine Elementsteifigkeit Aufschluss über eine notwendige Amplitude eines Schallsignals geben, da eine Form und Amplitude von Lamb-Wellen in Abhängigkeit von einer Anregungsenergie und unterliegenden Materialeigenschaften stehen kann. Nutzt man nun die vorliegende Information (Geometrie + Laminatdefinition), ist man zusätzlich in der Lage eine Ausbreitungsgeschwindigkeit von Lamb-Wellen in Platten mit anisotropem Materialverhalten zu berechnen. Aus allen Informationen lässt sich nun ein notwendiger Anstellwinkel an jedem Punkt des Bauteils berechnen. Man ist damit in der Lage, auf sämtliche Unstetigkeiten in einer Geometrie und eines Laminataufbaus zu reagieren. Die beiden Merkmale 1 und 2 können kombiniert werden. Merkmal 2 kann die notwendigen Parameter für eine Verwendung durch Merkmal 1 liefern.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung ist ein Prüfen vereinfacht. Ein gesondertes Koppelmittel ist entbehrlich. Auswertmöglichkeiten und/oder eine Auswertqualität ist/sind erhöht. Eine Prüfbarkeit laminierter Bauteile ist verbessert. Eine Prüfbarkeit von Bauteilen aus sowohl quasi-isotropem als auch stark anisotropem Material ist verbessert. Eine Prüfbarkeit von Bauteilen mit unterschiedlichen Materialstärken ist verbessert. Eine Prüfbarkeit von gekrümmten Bauteilen ist verbessert. Es ist jeweils eine optimale Einbringung von Ultraschall in ein zu prüfendes Bauteil ermöglicht. Dabei kann eine jeweilige Bauteilbeschaffenheit an einer Prüfposition berücksichtigt werden.

Nachfolgend wird ein/werden Ausführungsbeispiel/Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele/dieses Ausführungsbeispiels können allgemeine Merkmale der Erfindung darstellen. Mit anderen Merkmalen verbundene Merkmale dieser Ausführungsbeispiele/dieses Ausführungsbeispiels können auch einzelne Merkmale der Erfindung darstellen.

Es zeigen schematisch und beispielhaft:
- Fig. 1: eine Prüfeinrichtung mit einer einstellbaren Sendeeinrichtung und einer einstellbaren Empfangseinrichtung zur berührungslosen Ultraschallprüfung von Bauteilen und
- Fig. 2: eine Sendeeinrichtung und eine Empfangseinrichtung in zwei Prüfpositionen.

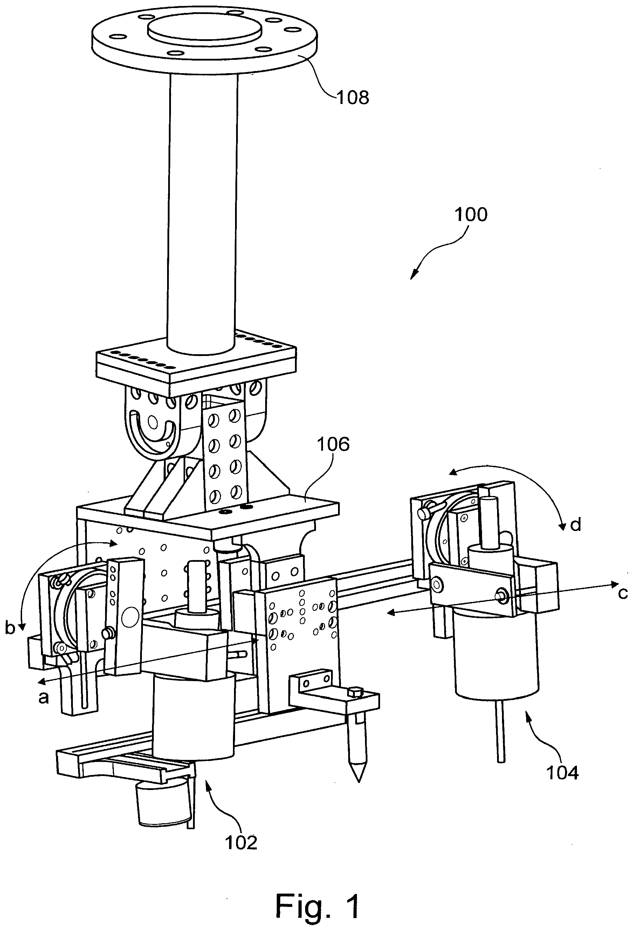

Fig. 1 zeigt eine Prüfeinrichtung 100 mit einer einstellbaren Sendeeinrichtung 102 und einer einstellbaren Empfangseinrichtung 104 zur berührungslosen Ultraschallprüfung von Bauteilen, wie Faserverbundbauteilen. Die Sendeeinrichtung 102 weist einen Ultraschallsender auf. Die Empfangseinrichtung 104 weist einen Ultraschallempfänger auf.

Die Prüfeinrichtung 100 weist einen Träger 106 auf. Der Träger 106 weist vorliegend mehrere zueinander verstellbare Trägerteile auf, die miteinander lösbar verbunden sind, um eine Voreinstellung zu ermöglichen. Bei einer anderen Ausführung kann der Träger 106 jedoch auch einteilig und/oder in sich nicht einstellbar ausgeführt sein.

Der Träger 106 weist einen Verbindungsflansch 108 auf. Der Verbindungsflansch 108 dient zur Verbindung der Prüfeinrichtung 100 mit einem Manipulator eines Industrieroboters. Die Prüfeinrichtung 100 dient dann als Effektor des Industrieroboters und ist mithilfe des Industrieroboters bewegbar.

Die Sendeeinrichtung 102 ist an dem Träger 106 in Pfeilrichtung a translatorisch und in Pfeilrichtung b rotatorisch einstellbar angeordnet. Die Empfangseinrichtung 104 ist an dem Träger 106 in Pfeilrichtung c translatorisch und in Pfeilrichtung d rotatorisch einstellbar angeordnet. Zum Einstellen der Sendeeinrichtung 102 und der Empfangseinrichtung 104 dienen Antriebe. Die Antriebe sind beispielsweise elektromotorische, hydraulische und/oder pneumatische Antriebe. Die Antriebe werden mithilfe eines elektrischen Steuergeräts angesteuert. Mithilfe der Antriebe können die Sendeeinrichtung 102 und/oder die Empfangseinrichtung 104 vor und/oder während eines Prüfvorgangs eingestellt werden. In translatorischer Richtung sind die Sendeeinrichtung 102 und die Empfangseinrichtung 104 derart einstellbar, dass ein Einleitpunkt und ein Ausleitpunkt für Ultraschall an einem zu prüfenden Bauteil voneinander ca. 1 cm bis ca. 15 cm, insbesondere ca. 2 cm bis ca. 12 cm, beabstandet sind.

Der Industrieroboter weist eine Steuereinrichtung auf. Die Steuereinrichtung des Industrieroboters dient vorliegend auch zum Steuern der Prüfeinrichtung 100. Mithilfe der Steuereinrichtung des Industrieroboters werden die Sendeeinrichtung 102 und/oder die Empfangseinrichtung 104 eingestellt und Prüfvorgänge gesteuert.

Zum Durchführen von Prüfvorgängen wird die Prüfeinrichtung 100 mithilfe des Industrieroboters entlang einer Prüfbahn über eine Oberfläche eines zu prüfenden Bauteils geführt.

Während die Prüfeinrichtung 100 entlang der Prüfbahn geführt wird, werden die Sendeeinrichtung 102 und/oder die Empfangseinrichtung 104 bahnsynchron eingestellt, um eine Luftultraschallprüfung unter Kompensation von Varianzen des Bauteils zu ermöglichen. Es können jeweils ein Winkel der Sendeeinrichtung 102 und der Empfangseinrichtung 104 zueinander sowie ein Abstand der Sendeeinrichtung 102 und der Empfangseinrichtung 104 voneinander eingestellt werden. Zum Bestimmen der jeweils erforderlichen Einstellungen werden CAD-Daten und/oder FEM-Daten des Bauteils herangezogen. Die FEM-Daten des Bauteils umfassen jeweils eine entsprechende Laminatdefinition. Es können demnach Informationen sowohl über eine Geometrie- als auch über eine Laminatdefinition des Bauteils genutzt werden. Damit kann eine Ausbreitungsgeschwindigkeit von Lamb-Wellen in dem Bauteil auch bei anisotropem Materialverhalten berechnet werden. Mithilfe dieser Informationen lässt sich nun eine erforderliche Einstellung der Prüfeinrichtung 100 an jedem Punkt des Bauteils berechnen. Es kann damit auf sämtliche Unstetigkeiten in einer Geometrie und eines Laminataufbaus reagieret werden. Es ist somit an jeder Stelle des Bauteils eine vollumfängliche, einseitige Prüfung in luftgekoppelter Ultraschalltechnik mit Lamb-Wellen auch für geometrisch komplexe Bauteile mit differenziertem Laminataufbau ermöglicht.

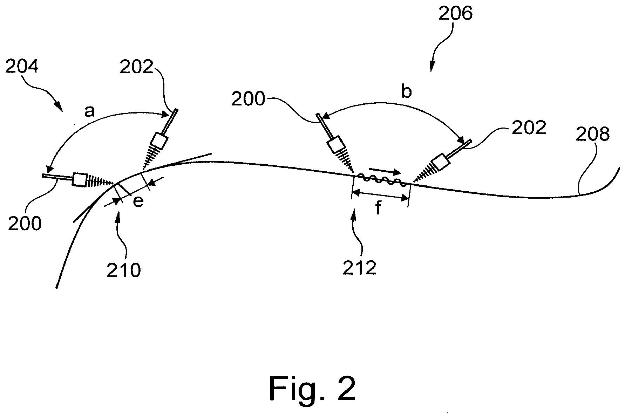

Fig. 2 zeigt eine Sendeeinrichtung 200 und eine Empfangseinrichtung 202 einer Prüfeinrichtung, wie Prüfeinrichtung 100 gemäß Fig. 1, in zwei Prüfpositionen 204, 206. Dabei wird die Prüfeinrichtung entlang einer Prüfbahn 208 geführt, die entlang einer Oberfläche eines zu prüfenden Bauteils verläuft.

An der Prüfposition 204 weist die Oberfläche des Bauteils eine konvexe Krümmung auf. An der Prüfposition 204 sind die Sendeeinrichtung 200 und die Empfangseinrichtung 202 zueinander in einem Winkel α eingestellt und voneinander mit einem Abstand e beabstandet. Der Winkel α beträgt vorliegend ca. 110° bis ca. 115°. Mit dieser Einstellung kann berührungslos eingeleiteter Ultraschall einen Abschnitt 210 des Bauteils durchlaufen und das Bauteil an dieser Position geprüft werden.

An der Prüfposition 206 weist die Oberfläche des Bauteils eine in etwa ebene Oberfläche auf. An der Prüfposition 206 sind die Sendeeinrichtung 200 und die Empfangseinrichtung 202 zueinander in einem Winkel β eingestellt und voneinander mit einem Abstand f beabstandet. Der Winkel β beträgt vorliegend ca. 80° bis ca. 85°. Mit dieser Einstellung kann berührungslos eingeleiteter Ultraschall einen Abschnitt 212 des Bauteils durchlaufen und das Bauteil an dieser Position geprüft werden.

### Bezugszeichen

- 100: Prüfeinrichtung
- 102: Sendeeinrichtung
- 104: Empfangseinrichtung
- 106: Träger
- 108: Verbindungsflansch

- 200: Sendeeinrichtung
- 202: Empfangseinrichtung
- 204: Prüfposition
- 206: Prüfposition
- 208: Prüfbahn
- 210: Abschnitt
- 212: Abschnitt

## Patentansprüche

1. Verfahren zum zerstörungsfreien Prüfen von Bauteilen, insbesondere Faserverbundbauteilen, mithilfe einer Prüfeinrichtung (100), die Prüfeinrichtung (100) aufweisend einen Träger, eine an dem Träger zu einer Bauteiloberfläche auf einen angepassten Abstand und einen angepassten Winkel einstellbar angeordnete Sendeeinrichtung (102, 200) zum Senden von Ultraschall und eine an dem Träger zu einer Bauteiloberfläche auf einen angepassten Abstand und einen angepassten Winkel einstellbar angeordnete Empfangseinrichtung zum Empfangen von Ultraschall wobei die Sendeeinrichtung (102, 200) und die Empfangseinrichtung jeweils voneinander gesondert translatorisch und/oder rotatorisch einstellbar sind, wobei zunächst die Sendeeinrichtung (102, 200) und/oder die Empfangseinrichtung (104, 202) unter Berücksichtigung einer digitalen Repräsentation eines zu prüfenden Bauteils und an eine jeweilige Prüfposition angepasst eingestellt werden und nachfolgend Ultraschall berührungslos in das Bauteil eingeleitet wird, **dadurch gekennzeichnet, dass** die Sendeeinrichtung und die Empfangseinrichtung auf derselben Bauteilseite angeordnet und mithilfe des eingeleiteten Ultraschalls in dem Bauteil Lamb-Wellen erzeugt werden.

2. Verfahren nach Anspruch 1, **dadurch gekennzeichnet, dass** die Sendeeinrichtung (102, 200) und/oder die Empfangseinrichtung (104, 202) zu einer Bauteiloberfläche jeweils auf einen angepassten Abstand (e, f) und einen angepassten Winkel (α, β) eingestellt werden.

3. Verfahren nach wenigstens einem der vorhergehenden Ansprüche, **dadurch gekennzeichnet, dass** die Prüfeinrichtung (100) entlang einer Prüfbahn (208) bewegt wird und dabei die Sendeeinrichtung (102, 200) und/oder die Empfangseinrichtung (104, 202) bahnsynchron verstellt werden.

4. Verfahren nach wenigstens einem der vorhergehenden Ansprüche, **dadurch gekennzeichnet, dass** die digitale Repräsentation des zu prüfenden Bauteils CAD-Daten und/oder FEM-Daten umfasst.

5. Prüfeinrichtung (100) zum zerstörungsfreien Prüfen von Bauteilen, insbesondere Faserverbundbauteilen, wobei die Prüfeinrichtung einen Träger, eine an dem Träger zu einer Bauteiloberfläche auf einen angepassten Abstand und einen angepassten Winkel einstellbar angeordnete Sendeeinrichtung (102, 200) zum Senden von Ultraschall und eingerichtet zum berührungslosen Einleiten von Ultraschall in das Bauteil, eine an dem Träger zu einer Bauteiloberfläche auf einen angepassten Abstand und einen angepassten Winkel einstellbar angeordnete Empfangseinrichtung (104, 202) zum Empfangen von Ultraschall und eine elektrische Steuereinrichtung zum Steuern der Sendeeinrichtung und/oder der Empfangseinrichtung und zum Einstellen einer jeweiligen Prüfposition unter Berücksichtigung einer digitalen Repräsentation eines zu prüfenden Bauteils aufweist, wobei die Sendeeinrichtung (102, 200) und die Empfangseinrichtung jeweils voneinander gesondert translatorisch und/oder rotatorisch einstellbar sind, **dadurch gekennzeichnet, dass** die Prüfeinrichtung (100) zur Anordnung der Sendeeinrichtung und der Empfangseinrichtung auf derselben Bauteilseite eingerichtet ist und mithilfe des eingeleiteten Ultraschalls in dem Bauteil Lamb-Wellen erzeugbar sind.

6. Prüfeinrichtung (100) nach Anspruch 5, **dadurch gekennzeichnet, dass** die Prüfeinrichtung (100) eine elektromotorische, hydraulische und/oder pneumatische Einstelleinrichtung zum Einstellen der Sendeeinrichtung (102, 200) und/oder der Empfangseinrichtung (104, 202) aufweist.

7. Prüfeinrichtung (100) nach Anspruch 6, **dadurch gekennzeichnet, dass** die elektrische Steuereinrichtung zum Steuern der Einstelleinrichtung eingerichtet ist.

8. Prüfeinrichtung (100) nach wenigstens einem der Ansprüche 5-7, **dadurch gekennzeichnet, dass** die Sendeeinrichtung (102, 200) und die Empfangseinrichtung (104, 202) gemeinsam entlang einer Prüfbahn (208) bewegbar sind.

## Claims

1. Method for inspecting components without destruction, specifically fibre composite components, by means of a testing device (100), the testing device (100) comprising a support, a transmitter (102, 200) for transmitting ultrasound which is arranged on the support relative to a component surface at an adjusted distance and is arranged to be adjustable to an adjusted angle and a receiver for receiving ultrasound which is arranged on the support relative to a component surface at an adjusted distance and adjustable to an adjusted angle, wherein the transmitter (102, 200) and the receiver can be adjusted separately from one another in translation and/or rotationally, wherein firstly the transmitter (102, 200) and/or the receiver (104, 202) are adjusted taking into consideration a digital representation of a component to be tested and adjusted to a respective testing position and then ultrasound is introduced to the component without contact, **characterised in that** the transmitter and the receiver are arranged on the same component side and Lamb waves are produced in the component by means of the introduced ultrasound.

2. Method according to claim 1, **characterised in that** the transmitter (102, 200) and/or the receiver (104, 202) are adjusted respectively relative to a component surface to an adjusted distance (e, f) and an adjusted angle (α, β).

3. Method according to at least one of the preceding claims, **characterised in that** the testing device (100) is moved along a testing track (208) and the transmitter (102, 200) and/or the receiver (104, 202) are adjusted synchronously to the track.

4. Method according to at least one of the preceding claims, **characterised in that** the digital representation of the component to be tested comprises CAD data and/or FEM data.

5. Testing device (100) for inspecting components without destruction, specifically fibre composite components, wherein the testing device comprises a support, a transmitter (102, 200) for transmitting ultrasound and set up for introducing ultrasound into the component without contact, which transmitter is arranged on the support relative to a component surface at an adjusted distance and is arranged to be adjustable to an adjusted angle, a receiver (104, 202) for receiving ultrasound which is arranged on the support relative to a component surface at an adjusted distance and is arranged to be adjustable to an adjusted angle, and an electric controller for controlling the transmitter and/or the receiver and for adjusting a respective testing position taking into consideration a digital representation of a component to be inspected, wherein the transmitter (102, 200) and the receiver can be adjusted separately from one another in translation and/or rotationally, **characterised in that** the testing device (100) is set up for the arrangement of the transmitter and the receiver on the same component side and Lamb waves can be produced in the component by means of the introduced ultrasound.

6. Testing device (100) according to claim 5, **characterised in that** the testing device (100) has an electromotive, hydraulic and/or pneumatic adjusting device for adjusting the transmitter (102, 200) and/or the receiver (104, 202).

7. Testing device (100) according to claim 6, **characterised in that** the electric controller is configured for controlling the adjusting device.

8. Testing device (100) according to at least one of claims 5-7, **characterised in that** the transmitter (102, 200) and the receiver (104, 202) can be moved jointly along a testing track (208).

## Revendications

1. Procédé de vérification non destructive de composants, en particulier de composants en matériau composite fibreux, à l'aide d'un dispositif de vérification (100), le dispositif de vérification (100) présentant un support, un dispositif de transmission (102, 200) pour émettre des ultrasons, qui est agencé sur le support par rapport à une surface de composant, réglable à une distance adaptée et un angle adapté, un dispositif de réception pour recevoir des ultrasons, qui est agencé sur le support par rapport à une surface de composant, réglable sur une distance adaptée et sur un angle adapté, le dispositif de transmission (102, 200) et le dispositif de de réception étant chacun réglables séparément en translation et/ou en rotation, le dispositif de transmission (102, 200) et/ou le dispositif de réception (104, 202) étant tout d'abord réglés, compte tenu de la représentation numérique d'un composant à vérification et adaptés à une position de vérification respective, et ensuite, des ultrasons étant introduits sans contact dans le composant, **caractérisé en ce que** le dispositif de transmission et le dispositif de réception sont agencés sur le même côté de composant et des ondes de Lamb sont engendrées dans le composant à l'aide des ultrasons introduits.

2. Procédé selon la revendication 1, **caractérisé en ce que** le dispositif de transmission (102, 200) et/ou le dispositif de réception (104, 202) sont chacun réglés sur une distance adaptée (e, f) et sur un angle (α, β) adapté par rapport à une surface de composant.

3. Procédé selon au moins l'une des revendications précédentes, **caractérisé en ce que** le dispositif de vérification (100) est déplacé le long d'une piste de vérification (208) et le dispositif de transmission (102, 200) et/ou le dispositif de réception (104, 202) sont ici réglés de manière synchrone avec la piste.

4. Procédé selon au moins l'une des revendications précédentes, **caractérisé en ce que** la représentation numérique du composant à vérifier comprend des données CAO et/ou des données FEM.

5. Procédé de vérification non destructive de composants, en particulier de composants en matériau composite fibreux, à l'aide d'un dispositif de vérification (100), le dispositif de vérification (100) présentant un support, un dispositif de transmission (102, 200) pour émettre des ultrasons, qui est agencé sur le support par rapport à une surface de composant, réglable à une distance adaptée et un angle adapté, un dispositif de réception pour recevoir des ultrasons, qui est agencé sur le support par rapport à une surface de composant, réglable sur une distance adaptée et sur un angle adapté, et un dispositif de commande électrique pour commander le dispositif d'émission et/ou le dispositif de réception et pour régler une position de vérification respective en tenant compte d'une représentation numérique d'un composant à vérifier, le dispositif d'émission (102, 200) et/ou le dispositif de réception étant chacun séparément réglable du point de vue translation et/ou rotation, **caractérisé en ce que** pour l'agencement du dispositif d'émission et du dispositif de réception, le dispositif de vérification (100) est configuré sur le même côté du composant et des ondes de Lamb sont engendrées dans le composant à l'aide des ultrasons introduits.

6. Dispositif de vérification (100) selon la revendication 5, **caractérisé en ce que** le dispositif de vérification (100) comporte un dispositif de réglage électromoteur, hydraulique et/ou pneumatique pour régler le dispositif de transmission (102, 200) et/ou le dispositif de réception (104, 202).

7. Dispositif de vérification (100) selon la revendication 6, **caractérisé en ce que** le dispositif de commande électrique est configuré pour commander le dispositif de réglage.

8. Dispositif de vérification (100) selon au moins l'une des revendications 5 à 7, **caractérisé en ce que** le dispositif de transmission (102, 200) et le dispositif de réception (104, 202) peuvent être déplacés en commun sur une piste de vérification (208).
